# EUROPEAN PATENT APPLICATION

(11) **EP 4 759 687 A1**
(43) Date of publication of application: **17.06.2026**
(21) Application number: 25223023.0
(22) Date of filing: 12.12.2025
(51) Int. Cl.: B62D 35/00, B62D 25/12

(54) **FLOW PASSAGE ASSEMBLY AND VEHICLE**

(30) Priority: 13.12.2024 CN 202411847451
(71) Applicant: Xiaomi EV Technology Co., Ltd., Beijing 100176 (CN)
(72) Inventor: TENG, Fei, Beijing 100176 (CN); PAN, Junjun, Beijing 100176 (CN); CAI, Wei, Beijing 100176 (CN); LIAO, Pingwei, Beijing 100176 (CN)
(74) Representative: Hersina, Günter

(57) **Abstract**

The invention relates to a flow passage assembly and a vehicle. The flow passage assembly includes a first flow passage member (1) and a second flow passage member (2), in which, a first flow passage (10) is formed inside the first flow passage member (1), the first flow passage including a first flow passage opening (101) and a second flow passage opening (102); a second flow passage (20) is formed inside the second flow passage member (2), the second flow passage including a third flow passage opening (201) and a fourth flow passage opening (202); the second flow passage opening (102) is configured to communicate with the fourth flow passage opening (202), so that the first flow passage (10) is in communication with the second flow passage (20) and a first flow path is formed; and under the first flow path, the third flow passage opening (201) is configured for inflow of a first flow medium, and the first flow passage opening (101) is configured for outflow of the first flow medium. That is, by arranging the first flow passage member and the second flow passage member in this way, the first flow medium is allowed to flow inside the first flow passage and the second flow passage, ensuring smooth discharge of the flow medium. In the case of applying to a vehicle, the flow passage assembly may act as an air duct, thus reducing wind resistance and improving aerodynamic performance.

## Description

### TECHNICAL FIELD

The invention relates to the field of flow passage structure technology, and in particular to a flow passage assembly and a vehicle.

### BACKGROUND

With the ongoing development of vehicles, a preference for increased driving range and energy consumption efficiency has led to increasingly high demands on the aerodynamic performance of entire vehicles.

### SUMMARY

To overcome the problems in the related art, the invention provides a flow passage assembly and a vehicle to solve the technical problems in the related art.

According to an embodiment of the invention, a flow passage assembly is provided. The flow passage assembly includes a first flow passage member and a second flow passage member, in which, a first flow passage is formed inside the first flow passage member, the first flow passage including a first flow passage opening and a second flow passage opening; a second flow passage is formed inside the second flow passage member, the second flow passage including a third flow passage opening and a fourth flow passage opening; the second flow passage opening is configured to communicate with the fourth flow passage opening, so that the first flow passage is in communication with the second flow passage and a first flow path is formed; and under the first flow path, the third flow passage opening is configured for inflow of a first flow medium, and the first flow passage opening is configured for outflow of the first flow medium.

In some embodiments, the second flow passage further includes at least one fifth flow passage opening; a second flow path is further formed when the first flow passage and the second flow passage are in a communication state; under the second flow path, the fifth flow passage opening is configured for outflow of a second flow medium.

In some embodiments, the flow passage assembly further includes a third flow passage member, and a third flow passage is formed inside the third flow passage member, the third flow passage including a sixth flow passage opening and a seventh flow passage opening; the sixth flow passage opening is configured to communicate with the second flow passage opening, so that the first flow passage is in communication with the third flow passage, and when the first flow passage and the third flow passage are in a communication state, the first flow passage opening is configured for inflow of a second flow medium, and the seventh flow passage opening is configured for outflow of the second flow medium.

In some embodiments, one of the first flow passage member and the second flow passage member is capable of moving relative to another one of the first flow passage member and the second flow passage member, and the first flow passage member and the second flow passage member have a communication position, in which, the second flow passage opening and the fourth flow passage opening are arranged opposite to each other and communicate with each other at the communication position.

In some embodiments, a first grid is arranged at the second flow passage opening of the first flow passage member; and/or a first grid is arranged at the fourth flow passage opening of the second flow passage member; and/or a second grid is arranged at the fifth flow passage opening of the second flow passage member.

In some embodiments, the first grid includes at least one first grid plate, the first grid plate is arranged at the second flow passage opening, and the first grid plate is arranged at an angle relative to the second flow passage opening; and/or the first grid includes at least one first grid plate, the first grid plate is arranged at the fourth flow passage opening, and the first grid plate is arranged at an angle relative to the fourth flow passage opening; and/or the second grid includes at least one second grid plate, and the second grid plate is arranged at an angle relative to the fifth flow passage opening.

In some embodiments, a plurality of first grid plates are provided, adjacent two of the plurality of first grid plates are spaced apart from each other, and the plurality of the first grid plates are parallel to each other; a plurality of second grid plates are provided, adjacent two of the plurality of second grid plates are spaced apart from each other, and the plurality of second grid plates are parallel to each other; and the first grid plates and the second grid plates are parallel to each other.

In some embodiments, the first flow passage includes a first flow passage segment and a second flow passage segment communicating with each other, and the first flow passage member includes a first flow passage component and a second flow passage component, in which the first flow passage segment is formed inside the first flow passage component, and the second flow passage segment is formed inside the second flow passage component; in which an end of the first flow passage segment away from the second flow passage segment is configured as the first flow passage opening, and an end of the second flow passage segment away from the first flow passage segment is configured as the second flow passage opening.

In some embodiments, a third grid is arranged at an end of the first flow passage segment adjacent to the second flow passage segment; and/or a third grid is arranged at an end of the second flow passage segment adjacent to the first flow passage segment.

In some embodiments, a first grid is arranged at the second flow passage opening, the first grid includes at least one first grid plate, and the first grid plate is arranged at an angle relative to the second flow passage opening; a second grid is arranged at the fifth flow passage opening, the second grid includes at least one second grid plate, and the second grid plate is arranged at an angle relative to the fifth flow passage opening; the third grid includes at least one third grid plate, and the third grid plate is arranged at an angle relative to an end of the first flow passage segment adjacent to the second flow passage segment; in which the first grid plate, the second grid plate and the third grid plate are parallel to each other.

In some embodiments, the second flow passage component is configured as a sealing member and includes a sealing member body, a first sealing portion and a second sealing portion; the second flow passage segment is formed inside the sealing member body; the first sealing portion is arranged on the sealing member body and located at a first end of the second flow passage segment, and the first sealing portion is capable of being hermetically connected to the first flow passage component, to hermetically connect the first flow passage segment and the second flow passage segment; the second sealing portion is arranged on the sealing member body and located at a second end of the second flow passage segment, and the second sealing portion is capable of being hermetically connected to the second flow passage member, to hermetically connect the second flow passage segment and the second flow passage.

In some embodiments, the first sealing portion includes a first elastic flange, the first elastic flange is arranged along a circumferential direction of the first end of the second flow passage segment, and is capable of elastically deforming along a first direction, the first flow passage component is configured to press against the first elastic flange in the first direction; and/or the second sealing portion includes a second elastic flange, the second elastic flange is arranged along a circumferential direction of the second end of the second flow passage segment, and is capable of elastically deforming along the first direction, the second flow passage member is configured to press against the second elastic flange in the first direction.

In some embodiments, the first flow passage component includes a first body and a first pressure-connection edge, the first flow passage segment is formed inside the first body, the first pressure-connection edge is arranged on the first body extending along the first direction, and is arranged along a circumferential direction of an end of the first flow passage segment, the first pressure-connection edge is configured to press against the first elastic flange in the first direction; and/or the second flow passage member includes a second body and a second pressure-connection edge, the second flow passage is formed inside the second body, the second pressure-connection edge is arranged on the second body extending along the first direction, and is arranged along a circumferential direction of the fourth flow passage opening of the second flow passage, the second pressure-connection edge is configured to press against the second elastic flange in the first direction.

In some embodiments, the sealing member further includes a third sealing portion, the third sealing portion is arranged on the sealing member body, and configured for hermetically connecting to an external component.

In some embodiments, the third sealing portion includes a sealing slot, the sealing slot is concavely arranged on an outer wall of the sealing member body, and configured for hermetically snapping with the external component; and/or the third sealing portion includes a sealing block, the sealing block is convexly arranged on an outer wall of the sealing member body, and configured for hermetically snapping with the external component.

In some embodiments, the sealing member is integrally formed using an elastic material.

In some embodiments, the first flow passage segment is gradually expanding in a direction away from the second flow passage segment.

In some embodiments, an area of an opening at an end of the first flow passage segment away from the second flow passage segment is a first area, an area of an opening at an end of the first flow passage segment adjacent to the second flow passage segment is a second area, and the first area is 1 to 2 times the second area.

In some embodiments, a length of the second flow passage is 1 to 1.5 times a length of the first flow passage segment.

In some embodiments, an extension direction of the first flow passage intersects with an extension direction of the second flow passage.

In some embodiments, the second flow passage includes a second flow passage body; the second flow passage member includes a first flow passage plate and a second flow passage plate, the first flow passage plate and the second flow passage plate are connected and jointed together face to face in a first direction, to define the second flow passage body extending along a second direction; the fourth flow passage opening is formed on the first flow passage plate or the second flow passage plate; the first flow passage member is arranged on a side of the second flow passage member in the first direction; in which the first direction intersects with the second direction.

In some embodiments, the second flow passage further includes at least one fifth flow passage opening; the first flow passage and the second flow passage further have a second flow path in a communication state; under the second flow path, the first flow passage opening is configured for inflow of a second flow medium, and the fifth flow passage opening is configured for outflow of the second flow medium; the first flow passage member is arranged adjacent to the first flow passage plate in the first direction, the fourth flow passage opening is formed on the first flow passage plate, the fifth flow passage opening is formed on the second flow passage plate; in which, in the second direction, the fifth flow passage opening is arranged between the third flow passage opening and the fourth flow passage opening.

In some embodiments, at least two fifth flow passage openings are provided, and the at least two fifth flow passage openings are spaced apart from each other in the second direction.

In some embodiments, the second flow passage member further includes a sealing component, the sealing component is arranged between the first flow passage plate and the second flow passage plate.

In some embodiments, the second flow passage further includes a groove flow passage communicating with the second flow passage body; the second flow passage member further includes an end structural member, the end structural member is concavely provided with a groove extending along the second direction; one of the first flow passage plate and the second flow passage plate is capable of covering the groove, forming the groove flow passage; in which an end of the groove flow passage away from the second flow passage body is configured as the third flow passage opening.

The invention further provides a vehicle. The vehicle includes a front cabin cover and the above flow passage assembly, the second flow passage member is arranged in a front cabin, and the third flow passage opening of the second flow passage is arranged facing forward and configured to communicate with the outside; the front cabin cover is formed with a cover plate opening, the first flow passage member is arranged in the cover plate opening, and the first flow passage opening of the first flow passage is configured to communicate with the outside; when the front cabin cover is in a closed state, the second flow passage opening of the first flow passage member and the fourth flow passage opening of the second flow passage member communicate with each other.

In some embodiments, the front cabin cover includes a front cabin outer plate and a front cabin inner plate, the front cabin outer plate and the front cabin inner plate are connected to each other and define a cover plate cavity; the front cabin outer plate is formed with an outer plate opening, the front cabin inner plate is formed with an inner plate opening, and the first flow passage member is at least partially arranged in the cover plate cavity; the first flow passage member is hermetically connected with the outer plate opening, and the first flow passage member is hermetically connected with the inner plate opening.

In some embodiments, the second flow passage extends along a direction from front to rear, and the first flow passage extends at an angle upward in a direction away from the second flow passage.

In some embodiments, the first flow passage extends rearward and at an angle upward in the direction away from the second flow passage, and an angle at which the first flow passage is inclined relative to a horizontal plane does not exceed 30 degrees.

In some embodiments, the first flow passage member is arranged adjacent to an outer side on left and/or right side of the vehicle; and/or the second flow passage member is arranged adjacent to the outer side on left and/or right side of the vehicle.

In some embodiments, two flow passage assemblies are provided, one of the two flow passage assemblies is arranged adjacent to an outer side on a left side of the vehicle, and another of the two flow passage assemblies is arranged adjacent to an outer side on a right side of the vehicle.

Technical solutions provided in embodiments of the invention may include the following beneficial effects. In the case that the first flow passage of the first flow passage member and the second flow passage of the second flow passage member communicate with each other, that is, in the case that the second flow passage opening of the first flow passage communicates with the fourth flow passage opening of the second flow passage, at least a first flow path may be formed. Under the first flow path, the first flow medium flows in from the third flow passage opening, sequentially flows through the second flow passage and the first flow passage, and finally flows out from the first flow passage opening. That is, by arranging the first flow passage member and the second flow passage member in this way, the first flow medium is allowed to flow inside the first flow passage and the second flow passage, ensuring smooth discharge of the flow medium.

It should be understood that the above general description and the following detailed description are only illustrative and explanatory, and do not limit embodiments of the invention.

### BRIEF DESCRIPTION OF THE DRAWINGS

The drawings herein are incorporated into the specification and constitute a part of the specification, showing embodiments that conform to the invention, and are used together with the specification to explain the principles of the embodiments of the invention.
FIG. 1 is a structural schematic diagram of a flow passage assembly according to an embodiment of the invention.
FIG. 2 is a sectional diagram of along line E-E in FIG. 1.
FIG. 3 is a partial enlarged diagram of portion F in FIG. 2.
FIG. 4 is a partial enlarged diagram of portion G in FIG. 2.
FIG. 5 is a structural schematic diagram of a second flow passage member according to an embodiment of the invention.
FIG. 6 is a sectional diagram of along line H-H in FIG. 4.
FIG. 7 is a structural schematic diagram of a second flow passage component of a flow passage assembly according to an embodiment of the invention.
FIG. 8 is a sectional diagram of along line I-I in FIG. 7.
FIG. 9 is a structural schematic diagram of a first flow passage member and a front cabin cover of a flow passage assembly according to an embodiment of the invention.
FIG. 10 is a sectional diagram of along line J-J in FIG. 9.
FIG. 11 is a partial enlarged diagram of portion K in FIG. 10.
FIG. 12 is a structural schematic diagram of a flow passage assembly and a front cabin cover according to an embodiment of the invention, in which an end structural member is shown.

### REFERENCE NUMERALS

1: first flow passage member; 10: first flow passage; 101: first flow passage opening; 102: second flow passage opening; 103: first flow passage segment; 104: second flow passage segment; 11: first flow passage component; 111: first body; 112: first pressure-connection edge; 12: second flow passage component; 121: sealing member body; 122: first sealing portion; 123: second sealing portion; 124: third sealing portion;
2: second flow passage member; 20: second flow passage; 201: third flow passage opening; 202: fourth flow passage opening; 203: fifth flow passage opening; 2001: second flow passage body; 2002: groove flow passage; 21: second body; 22: second pressure-connection edge; 23: first flow passage plate; 24: second flow passage plate; 26: end structural member; 261: groove;
3: first grid; 31: first grid plate;
4: second grid; 41: second grid plate;
5: third grid; 51: third grid plate;
6: front cabin cover; 60: cover plate cavity; 61: front cabin outer plate; 610: outer plate opening; 62: front cabin inner plate; 620: inner plate opening;
A: first direction; B: second direction.

### DETAILED DESCRIPTION

Reference will now be made in detail to the exemplary embodiments, examples of which are illustrated in the accompanying drawings. When the following description refers to the accompanying drawings, the same numerals in different figures refer to the same or similar elements unless otherwise indicated. The implementations described in the following embodiments do not represent all implementations consistent with the invention. Rather, they are merely examples of devices and methods consistent with some aspects of the invention as recited in the appended claims.

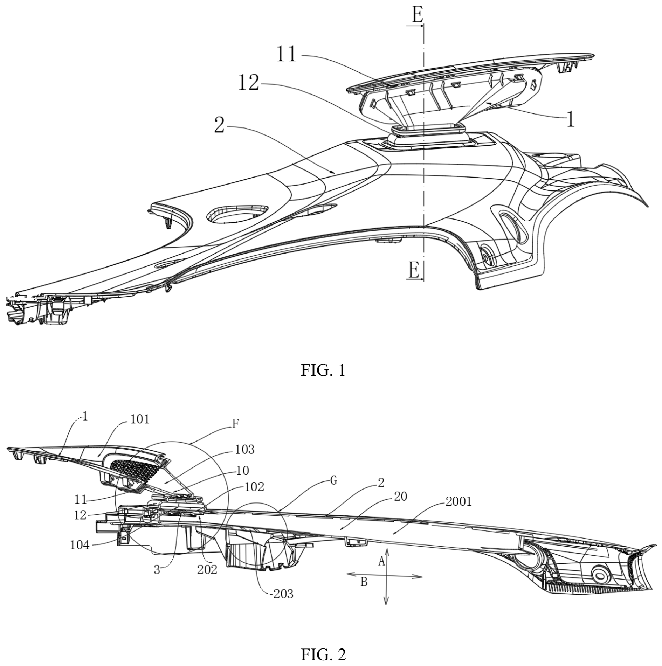

In the disclosure, unless otherwise specified, the directional terms "first direction, second direction and third direction" refer to three intersecting directions. Specifically, the first direction, the second direction and the third direction may be pairwise perpendicular to each other, as specifically shown in FIG. 1.

Directional terms such as "inside, external" refer to the inside and outside of the specific structural contour. Terms such as "first, second" are used only to distinguish one element from another element, without implying sequence or importance. Additionally, "plurality of" in the present disclosure refers to two or more, including two.

In the description of the invention, it should also be noted that, unless otherwise expressly defined and limited, the terms "arranged" and "connected" should be interpreted broadly. For example, the connection may be fixed connected, detachably connected, or integrally connected; it may be direct connection, or indirect connection through an intermediate medium. An ordinary person skilled in the art may understand the specific meanings of the above terms in the disclosure according to specific circumstances.

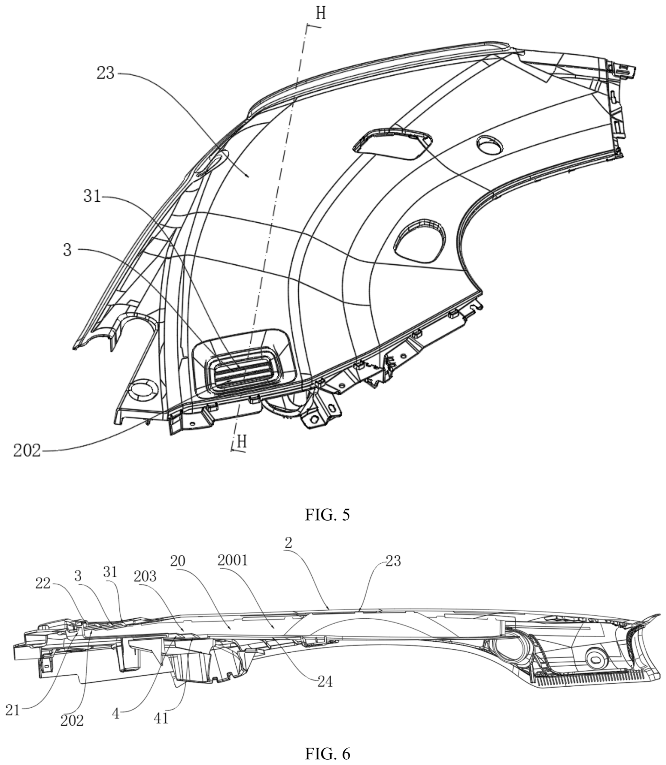

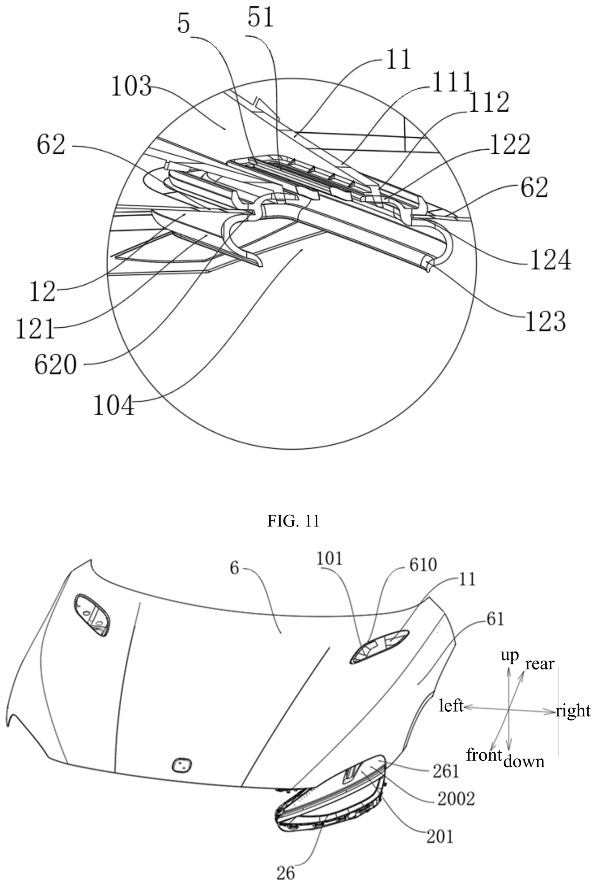

Referring to FIG. 1 to FIG. 12, the invention provides a flow passage assembly. The flow passage assembly includes a first flow passage member 1 and a second flow passage member 2. A first flow passage 10 is formed inside the first flow passage member 1, and the first flow passage 10 includes a first flow passage opening 101 and a second flow passage opening 102. A second flow passage 20 is formed inside the second flow passage member 2, the second flow passage 20 includes a third flow passage opening 201 and a fourth flow passage opening 202. The second flow passage opening 102 is configured to communicate with the fourth flow passage opening 202, so that the first flow passage 10 is in communication with the second flow passage 20 and a first flow path is formed. Under the first flow path, the third flow passage opening 201 is configured for inflow of a first flow medium, and the first flow passage opening 101 is configured for outflow of the first flow medium.

In the above technical solution, in the case that the first flow passage 10 of the first flow passage member 1 and the second flow passage 20 of the second flow passage member 2 communicate with each other, that is, in the case that the second flow passage opening 102 of the first flow passage 10 communicates with the fourth flow passage opening 202 of the second flow passage 20, at least the first flow path may be formed. Under the first flow path, the first flow medium flows in from the third flow passage opening 201, sequentially flows through the second flow passage 20 and the first flow passage 10, and finally flows out from the first flow passage opening 101. That is, by arranging the first flow passage member 1 and the second flow passage member 2 in this way, the first flow medium is allowed to flow inside the first flow passage 10 and the second flow passage 20, ensuring smooth discharge of the flow medium.

For example, the first flow medium may be configured as air. The flow passage assembly may be applied to a vehicle and arranged at a front cabin of the vehicle for inflow of air, so as to reduce wind resistance as much as possible and improve aerodynamic performance of the vehicle. However, the invention does not limit the specific type of the first flow medium, nor does it limit the specific application scenario of the flow passage assembly.

Optionally, the second flow passage 20 further includes at least one fifth flow passage opening 203. A second flow path is further formed when the first flow passage 10 and the second flow passage 20 are in a communication state. Under the second flow path, the fifth flow passage opening 203 is configured for outflow of a second flow medium.

That is, when the first flow passage 10 and the second flow passage 20 are in the communication state, that is, when the second flow passage opening 102 and the fourth flow passage opening 202 communicate with each other, the first flow passage 10 and the second flow passage 20 further include the second flow path. Under the second flow path, the second flow medium flows in from the first flow passage opening 101, sequentially flows through the first flow passage 10 and the second flow passage 20, and flows out from the fifth flow passage opening 203.

That is, by arranging the first flow passage member 1 and the second flow passage member 2 in this way, both the first flow medium and the second flow medium are allowed to flow inside the first flow passage 10 and the second flow passage 20, ensuring smooth discharge of the two media while minimizing mutual interference between the two as much as possible.

Optionally, the first flow medium may be air, and the second flow medium may be water.

In another implementation, the flow passage assembly may further include a third flow passage member (not shown). A third flow passage (not shown) is formed inside the third flow passage member, and the third flow passage includes a sixth flow passage opening (not shown) and a seventh flow passage opening (not shown). The sixth flow passage opening is configured to communicate with the second flow passage opening 102, so that the first flow passage 10 is in communication with the third flow passage. When the first flow passage and the third flow passage are in a communication state, the first flow passage opening 101 is configured for inflow of a second flow medium, and the seventh flow passage opening is configured for outflow of the second flow medium.

That is, for the first flow medium, the first flow medium flows in from the second flow passage 20 and then flows out from the first flow passage 10. For the second flow medium, after flowing out from the first flow passage 10, the second flow medium may not flow into the second flow passage 20. By arranging the third flow passage member in this way, the second flow medium flowing out from the first flow passage 10 flows into the third flow passage and is then discharged, minimizing interference between the first flow medium and the second flow medium as much as possible.

Optionally, referring to FIG. 1 and FIG. 2, one of the first flow passage member 1 and the second flow passage member 2 is capable of moving relative to another one of the first flow passage member 1 and the second flow passage member 2. The first flow passage member 1 and the second flow passage member 2 have a communication position. The second flow passage opening 102 and the fourth flow passage opening 202 are arranged opposite to each other and communicate with each other at the communication position.

In an implementation, the first flow passage member 1 may move relative to the second flow passage member 2, or the second flow passage member 2 may move relative to the first flow passage member 1, which is not limited in the invention. Additionally, when the first flow passage member 1 and the second flow passage member 2 are at the communication position, the second flow passage opening 102 of the first flow passage 10 and the fourth flow passage opening 202 of the second flow passage 20 are arranged opposite to each other and communicate with each other.

Optionally, the first flow passage member 1 is capable of moving relative to the second flow passage member 2. For example, the first flow passage member 1 may be arranged on a first external component, and the second flow passage member 2 may be arranged on a second external component. For example, the first external component is movably connected to the second external component. The movably connected includes but is not limited to rotation or translation. When the first flow passage member 1 moves with the first external component to the communication position, the first flow passage member 1 and the second flow passage member 2 communicate with each other. When the first flow passage member 1 is not at the communication position relative to the second flow passage member 2, the second flow passage opening 102 of the first flow passage member 1 and the fourth flow passage opening 202 of the second flow passage member 2 may not communicate.

Optionally, referring to FIG. 2 to FIG. 4, a first grid 3 is arranged at the second flow passage opening 102 of the first flow passage member 1; and/or a first grid 3 is arranged at the fourth flow passage opening 202 of the second flow passage member 2.

In the implementation, the first grid 3 may be arranged at the second flow passage opening 102, or at the fourth flow passage opening 202, or at both the second flow passage opening 102 and the fourth flow passage opening 202, which is not limited in the invention. Additionally, the first grid 3 is capable of guiding the first flow medium and the second flow medium, and buffering at least one of the first flow medium and the second flow medium. For example, when the first flow medium is air and the second flow medium is water, the first grid 3 is capable of guiding the wind, draining the water, and provide a certain buffering effect on the water.

Additionally, a second grid 4 may be arranged at the fifth flow passage opening 203 of the second flow passage member 2. The second grid 4 is capable of guiding inflow of the second flow medium and blocking the first flow medium from flowing into the fifth flow passage opening 203 to a certain extent.

Optionally, referring to FIG. 2 to FIG. 4, the first grid 3 includes at least one first grid plate 31, the first grid plate 31 is arranged at the second flow passage opening 102, and the first grid plate 31 is arranged at an angle relative to the second flow passage opening 102; and/or the first grid 3 includes at least one first grid plate 31, the first grid plate 31 is arranged at the fourth flow passage opening 202, and the first grid plate 31 is arranged at an angle relative to the fourth flow passage opening 202; and/or the second grid 4 includes at least one second grid plate 41, and the second grid plate 41 is arranged at an angle relative to the fifth flow passage opening 203.

In the embodiments, by arranging the grid plate at an angle relative to the corresponding flow passage opening 102, normal flow of the fluid medium is ensured while effectively buffering the fluid.

For example, a plurality of first grid plates 31 are provided. Adjacent two of the plurality of first grid plates 31 are spaced apart from each other, and the plurality of first grid plates 31 are parallel to each other. A plurality of second grid plates 41 are provided. Adjacent two of the plurality of second grid plates 41 are spaced apart from each other, and the plurality of second grid plates 41 are parallel to each other. The first grid plate 31 and the second grid plate 41 are parallel to each other.

In the embodiments, the first grid plates 31 and the second grid plates 41 that are parallel to each other are both capable of guiding the second flow medium, facilitating flow of the second flow medium under the second flow path. Additionally, the first grid plate 31 is capable of guiding the first flow medium, while the second grid plate 41 may block the first flow medium from flowing into the fifth flow passage opening 203 to a certain extent. This ensures that the first flow path and the second flow path work simultaneously without mutual interference.

However, the invention does not limit the specific number of the first grid plates 31 and the second grid plates 41. In other implementations, one first grid plate 31 and one second grid plate 41 may be provided and be parallel to each other.

Referring to FIG. 1 to FIG. 3, the first flow passage 10 includes a first flow passage segment 103 and a second flow passage segment 104 communicating with each other. The first flow passage member 1 includes a first flow passage component 11 and a second flow passage component 12. The first flow passage segment 103 is formed inside the first flow passage component 11, and the second flow passage segment 104 is formed inside the second flow passage component 12. An end of the first flow passage segment 103 away from the second flow passage segment 104 is configured as the first flow passage opening 101, and an end of the second flow passage segment 104 away from the first flow passage segment 103 is configured as the second flow passage opening 102.

Dividing the flow passage into two parts and arranging the two parts in different components allows flexible adjustment of a position of each component based on actual installation environments, better adapting to spatial constraints in different application scenarios. This not only improves product versatility and adaptability but also saves installation space to a certain extent.

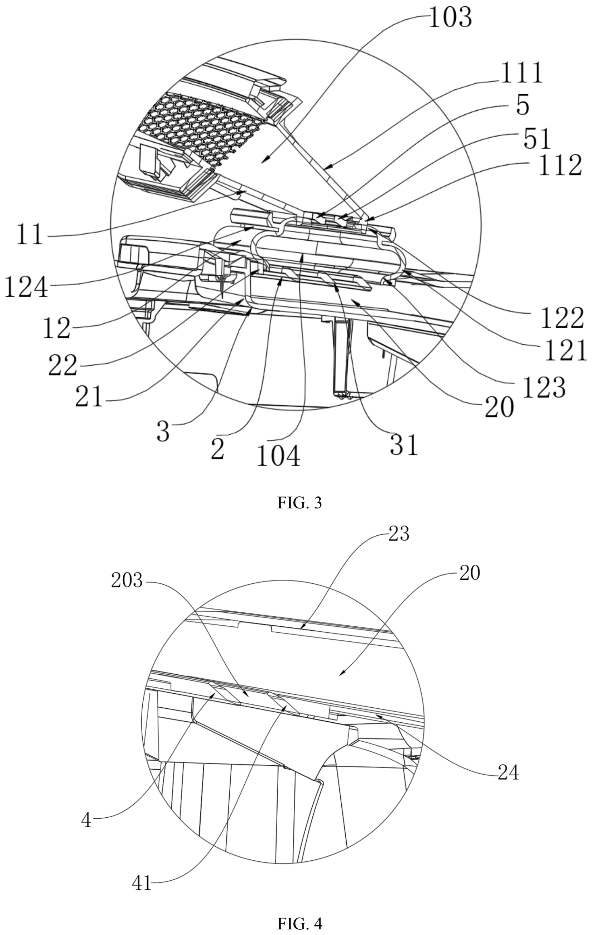

Optionally, referring to FIG. 3, a third grid 5 is arranged at an end of the first flow passage segment 103 adjacent to the second flow passage segment 104; and/or a third grid 5 is arranged at an end of the second flow passage segment 104 adjacent to the first flow passage segment 103.

In this embodiment, by arranging the third grid 5, the third grid 5 is capable of guiding the first flow medium and the second flow medium, and buffering at least one of the first flow medium and the second flow medium, preventing the entering of high-speed or high-momentum media from impacting and damaging structural components or sealing performance between structures.

In another embodiment, referring to FIG. 3 and FIG. 4, a first grid 3 is arranged at the second flow passage opening 102. The first grid 3 includes at least one first grid plate 31, and the first grid plate 31 is arranged at an angle relative to the second flow passage opening 102. A second grid 4 is arranged at the fifth flow passage opening 203. The second grid 4 includes at least one second grid plate 41, and the second grid plate 41 is arranged at an angle relative to the fifth flow passage opening 203. The third grid 5 includes at least one third grid plate 51, and the third grid plate 51 is arranged at an angle relative to an end of the first flow passage segment 103 adjacent to the second flow passage segment 104. The first grid plate 31, the second grid plate 41 and the third grid plate 51 are parallel to each other. The first grid plate 31, second grid plate 41 and third grid plate 51 that are parallel to each other ensure that the first flow medium under the first flow path and the second flow medium under the second flow path flow along their respective paths without mutual interference.

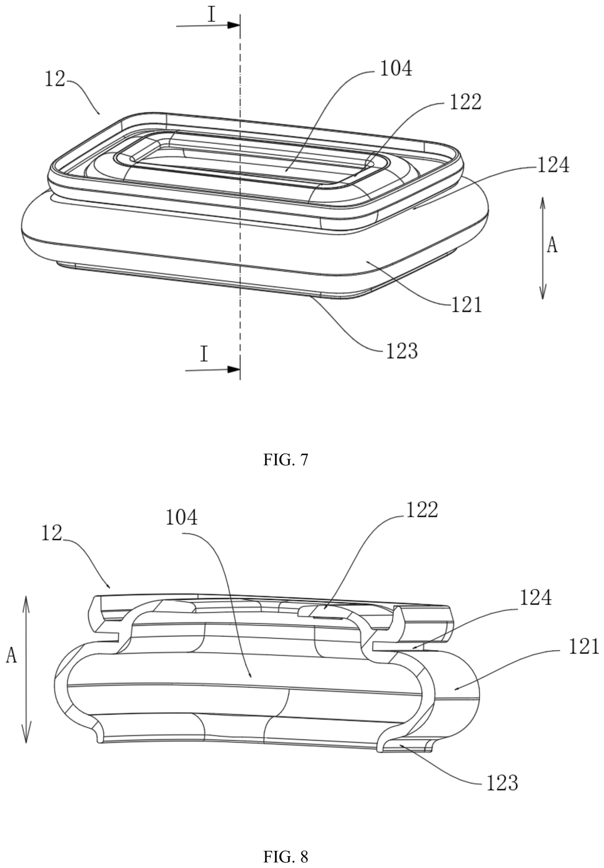

Optionally, referring to FIG. 7 and FIG. 8, the second flow passage component 12 is configured as a sealing member, and includes a sealing member body 121, a first sealing portion 122 and a second sealing portion 123. The second flow passage segment 104 is formed inside the sealing member body 121. The first sealing portion 122 is arranged on the sealing member body 121 and located at a first end of the second flow passage segment 104. The first sealing portion 122 is capable of being hermetically connected to the first flow passage component 11, to hermetically connect the first flow passage segment 103 and the second flow passage segment 104. The second sealing portion 123 is arranged on the sealing member body 121 and located at a second end of the second flow passage segment 104. The second sealing portion 123 is capable of being hermetically connected to the second flow passage member 2, to hermetically connect the second flow passage segment 104 and the second flow passage 20.

In the implementation, by arranging the first sealing portion 122 and the second sealing portion 123 in this way, sealing performance between both ends of the sealing member and the first flow passage component 11 and the second flow passage member 2 is achieved, thus preventing air or liquid leakage and improving sealing performance.

For sealing considerations, the sealing member body 121, the first sealing portion 122 and the second sealing portion 123 may be configured as an integral structure to minimize sealing requirements at connection interfaces.

For considerations of detachability or partial replacement, the first sealing portion 122 and the second sealing portion 123 may also be detachably connected to the sealing member body 121. However, sealing performance between the first sealing portion 122, the second sealing portion 123 and the sealing member body 121 must be ensured first. When the first sealing portion 122 or the second sealing portion 123 is damaged and needs to be replaced, only the first sealing portion 122 or second sealing portion 123 is replaced instead of replacing the entire sealing member, effectively reducing costs.

Additionally, the first sealing portion 122 and the second sealing portion 123 may be configured in any appropriate shape and structure, which is not limited in the invention. The specific materials of the first sealing portion 122 and the second sealing portion 123 are not limited in the invention.

In an implementation, referring to FIG. 3, FIG. 7 and FIG. 8, the first sealing portion 122 may include a first elastic flange. The first elastic flange is arranged along a circumferential direction of the first end of the second flow passage segment 104, and is capable of elastically deforming along a first direction A. The first flow passage component 11 is configured to press against the first elastic flange in the first direction A.

In the implementation, firstly, the first elastic flange is arranged along the circumferential direction of the first end of the second flow passage segment 104 and is capable of elastically deforming along the first direction A. The first elastic flange may deform appropriately based on a pressing-connection condition with the first flow passage component 11, ensuring tight contact between interfaces and greatly enhancing sealing reliability.

Secondly, the first elastic flange allows certain assembly errors. It may adjust its shape during pressing to accommodate minor dimensional deviations or irregular surfaces, making it more tolerant to small errors in manufacturing and installation processes.

Further, since the first elastic flange has elastic deformation capability, it may act as a buffer against external vibrations, preventing sealing failure caused by vibrations, and further improving sealing stability.

Additionally, the sealing can be realized by pressing the first flow passage component 11 in the specified direction to a specified position, to complete the hermetic connection, without additional steps such as tightening screws, facilitating operation.

Selection and design of elastic materials may reduce wear caused by hard collisions. The elastic deformation capability also means it may maintain good sealing performance after being disassembled a plurality of times, indirectly extending the service life of the sealing member.

In another implementation, referring to FIG. 3, FIG. 7 and FIG. 8, the second sealing portion 123 may include a second elastic flange. The second elastic flange is arranged along a circumferential direction of the second end of the second flow passage segment 104, and is capable of elastically deforming along the first direction A. The second flow passage member 2 is configured to press against the second elastic flange in the first direction A.

In the implementation, firstly, the second elastic flange is arranged along the circumferential direction of the second end of the second flow passage segment 104 and is capable of elastically deforming along the first direction A. The second elastic flange may deform appropriately based on a pressing-connection condition with the second flow passage member 2, ensuring tight contact between interfaces and greatly enhancing sealing reliability.

Secondly, the second elastic flange allows certain assembly errors. It may adjust its shape during pressing to accommodate minor dimensional deviations or irregular surfaces, making it more tolerant to small errors in manufacturing and installation processes.

Further, since the second elastic flange has elastic deformation capability, it may act as a buffer against external vibrations, preventing sealing failure caused by vibrations, and further improving sealing stability.

Additionally, the sealing can be realized by pressing the second elastic flange and the second flow passage member 2 in the specified direction a specified position, to complete the hermetic connection, without additional steps such as tightening screws, facilitating operation.

Selection and design of elastic materials may reduce wear caused by hard collisions. The elastic deformation capability also means it may maintain good sealing performance after being disassembled a plurality of times, indirectly extending the service life of the sealing member.

Optionally, referring to FIG. 3, the first flow passage component 11 includes a first body 111 and a first pressure-connection edge 112. The first flow passage segment 103 is formed inside the first body 111. The first pressure-connection edge 112 is arranged on the first body 111 extending along the first direction A, and is arranged along a circumferential direction of an end of the first flow passage segment 103. The first pressure-connection edge 112 is configured to press against the first elastic flange in the first direction A.

In embodiments, the first pressure-connection edge 112 may be configured as a rigid structure. The first pressure-connection edge 112 arranged along the circumferential direction of the end of the first flow passage segment 103 may evenly distribute force on the first elastic flange, avoiding concentration of localized stress and preventing permanent deformation or damage to the first elastic flange due to over-compression, thus extending the service life of the sealing member. Additionally, the first pressure-connection edge 112 is specifically designed to match the first elastic flange. This not only simplifies installation (only requiring application of appropriate pressure along the first direction A) but also ensures consistency and accuracy in each installation, reducing errors caused by human factors.

Optionally, referring to FIG. 3, the second flow passage member 2 includes a second body 21 and a second pressure-connection edge 22. The second flow passage 20 is formed inside the second body 21. The second pressure-connection edge 22 is arranged on the second body 21 extending along the first direction A, and is arranged along a circumferential direction of the fourth flow passage opening 202 of the second flow passage 20. The second pressure-connection edge 22 is configured to press against the second elastic flange in the first direction A.

In the implementation, the second pressure-connection edge 22 may be configured as a rigid structure. The second pressure-connection edge 22 arranged along the circumferential direction of the fourth flow passage opening 202 may evenly distribute force on the second elastic flange, avoiding concentration of localized stress and preventing permanent deformation or damage to the second elastic flange due to over-compression, thus extending the service life of the sealing member. Additionally, the second pressure-connection edge 22 is specifically designed to match the second elastic flange. This not only simplifies installation (only requiring application of appropriate pressure along the first direction A) but also ensures consistency and accuracy in each installation, reducing errors caused by human factors.

Referring to FIG. 3, FIG. 7 and FIG. 8, the sealing member may further include a third sealing portion 124. The third sealing portion 124 is arranged on the sealing member body 121, and configured for hermetically connecting to an external component.

That is, in the implementation, when the sealing member is arranged on the external component, sealing performance between the sealing member and the external component needs to be ensured. The third sealing portion 124 may effectively achieve hermetic connection between the sealing member and the external component. The third sealing portion 124 may be configured in any appropriate shape and structure, which is not limited in the invention.

For example, the third sealing portion 124 includes a sealing slot. The sealing slot is concavely arranged on an outer wall of the sealing member body 121, and configured for hermetically snapping with the external component; and/or the third sealing portion 124 includes a sealing block. The sealing block is convexly arranged on an outer wall of the sealing member body 121, and configured for hermetically snapping with the external component. That is, the hermetic connection between the sealing member and the external component is achieved via the sealing snap connection while reducing the number of components. When the flow passage assembly is applied to a vehicle, the external component may be a front cabin inner plate 62.

Optionally, the second flow passage component 12 configured as the sealing member may be integrally formed using an elastic material. For example, the second flow passage component 12 may be integrally formed using a rubber material. However, the invention does not limit the specific material of the second flow passage component 12.

Referring to FIG. 2, FIG. 5, FIG. 6 and FIG. 12, the second flow passage 20 includes a second flow passage body 2001. The second flow passage member 2 includes a first flow passage plate 23 and a second flow passage plate 24. The first flow passage plate 23 and the second flow passage plate 24 are connected and jointed together face to face in the first direction A, to define the second flow passage body 2001 extending along the second direction B. The first flow passage member 1 is arranged on a side of the first flow passage plate 23 away from the second flow passage plate 24 in the first direction A. The fourth flow passage opening 202 is formed on the first flow passage plate 23. The fifth flow passage opening 203 is formed on the second flow passage plate 24. In the second direction B, the fifth flow passage opening 203 is arranged between the third flow passage opening 201 and the fourth flow passage opening 202. The first direction A intersects with the second direction B.

In the implementation, the first flow medium flows in from the third flow passage opening 201, enters the second flow passage body 2001 and the first flow passage 10, and finally flows out from the first flow passage opening 101. The second flow medium flows in from the first flow passage opening 101, sequentially flows through the first flow passage 10 and the second flow passage body 2001, and flows out from the fifth flow passage opening 203. Additionally, by arranging the fifth flow passage opening 203 between the third flow passage opening 201 and the fourth flow passage opening 202 in the second direction B, it may effectively prevent the second flow medium from flowing out from the third flow passage opening 201.

For example, in specific application scenarios, the flow passage assembly may be applied to a vehicle and arranged at a front cabin of the vehicle. The constructed first flow path serves as a flow passage for air circulation, improving aerodynamic performance of the vehicle. The constructed second flow path serves as a drainage passage. The third flow passage opening 201 may be arranged at a front side lamp of the vehicle and facing forward for air intake. As described above, by arranging the fifth flow passage opening 203 between the third flow passage opening 201 and the fourth flow passage opening 202 in the second direction B, it may effectively prevent the second flow medium from flowing out from the third flow passage opening 201. That is, water outflow from the front side lamp may be effectively avoided, preventing a "tearing" issue at the front side lamp. Drainage may be achieved within the front cabin, improving user experience.

Optionally, a plurality of fifth flow passage openings 203 may be provided. The plurality of fifth flow passage openings 203 are spaced apart from each other in the second direction B, thus improving drainage effect and minimizing water flow toward the third flow passage opening 201.

Optionally, the second flow passage member 2 further includes a sealing component (not shown). The sealing component is arranged between the first flow passage plate 23 and the second flow passage plate 24, to improve sealing performance between the first flow passage plate 23 and the second flow passage plate 24. The sealing component may be configured as a sealing strip. However, the invention does not limit the specific material of the sealing component.

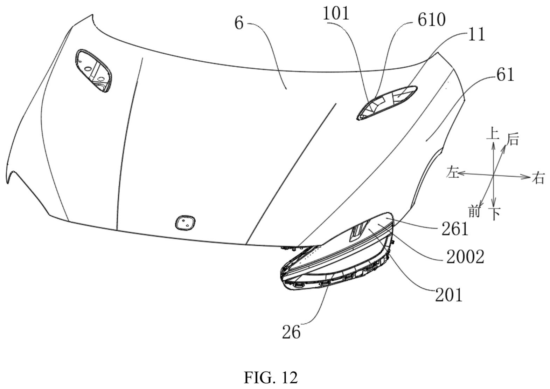

Referring to FIG. 12, the second flow passage 20 further includes a groove flow passage 2002 communicating with the second flow passage body 2001. The second flow passage member 2 further includes an end structural member 26. The end structural member 26 is concavely provided with a groove 261 extending along the second direction B. The second flow passage plate 24 is connected to the end structural member 26. The first flow passage plate 23 is connected to the end structural member 26 and covers the groove 261, forming the groove flow passage 2002. An end of the groove flow passage 2002 away from the second flow passage body 2001 is configured as the third flow passage opening 201.

In the implementation, by introducing the groove flow passage 2002 and configuring one end of the groove flow passage 2002 as the third flow passage opening 201, effective control of fluid flow paths may be achieved, such as changing flow direction or implementing flow splitting to achieve the effective control of fluid flow paths.

The end structural member 26 may be configured as any appropriate structure. For example, the end structural member 26 may be configured as an installation frame for a front side lamp of the vehicle. By utilizing structural components of the vehicle itself to form the groove flow passage 2002 for air intake, component count is reduced, costs are lowered, and structural compactness is improved.

Optionally, referring to FIG. 3, the first flow passage segment 103 is gradually expanding in a direction away from the second flow passage segment 104. For the first flow medium, this facilitates the outflow of the first flow medium. For the second flow medium, this facilitates the inflow of the second flow medium.

For example, an area of an opening at an end of the first flow passage segment 103 away from the second flow passage segment 104 is a first area. An area of an opening at an end of the first flow passage segment 103 adjacent to the second flow passage segment 104 is a second area. The first area is 1 to 2 times the second area.

Optionally, a length of the second flow passage 20 is 1 to 1.5 times a length of the first flow passage segment 103.

Optionally, an extension direction of the first flow passage 10 intersects with an extension direction of the second flow passage 20, to meet requirements for flow media to flow in different directions.

The invention also provides a vehicle. The vehicle includes a front cabin cover 6 and the flow passage assembly described above. The second flow passage member 2 is arranged in a front cabin. The third flow passage opening 201 of the second flow passage 20 is arranged facing forward and configured to communicate with the outside. The front cabin cover 6 is formed with a cover plate opening. The first flow passage member 1 is arranged in the cover plate opening, and the first flow passage opening 101 of the first flow passage 10 is configured to communicate with the outside. When the front cabin cover 6 is in a closed state, the second flow passage opening 102 of the first flow passage member 1 and the fourth flow passage opening 202 of the second flow passage member 2 communicate with each other.

That is, the flow passage assembly may be applied to the vehicle and arranged in the front cabin of the vehicle to serve as a flow passage for air circulation, thus improving aerodynamic performance of the vehicle. Meanwhile, the flow passage assembly may also serve as a drainage passage, ensuring normal operation under conditions such as rainy days. However, the invention does not limit the specific application scenario of the flow passage assembly.

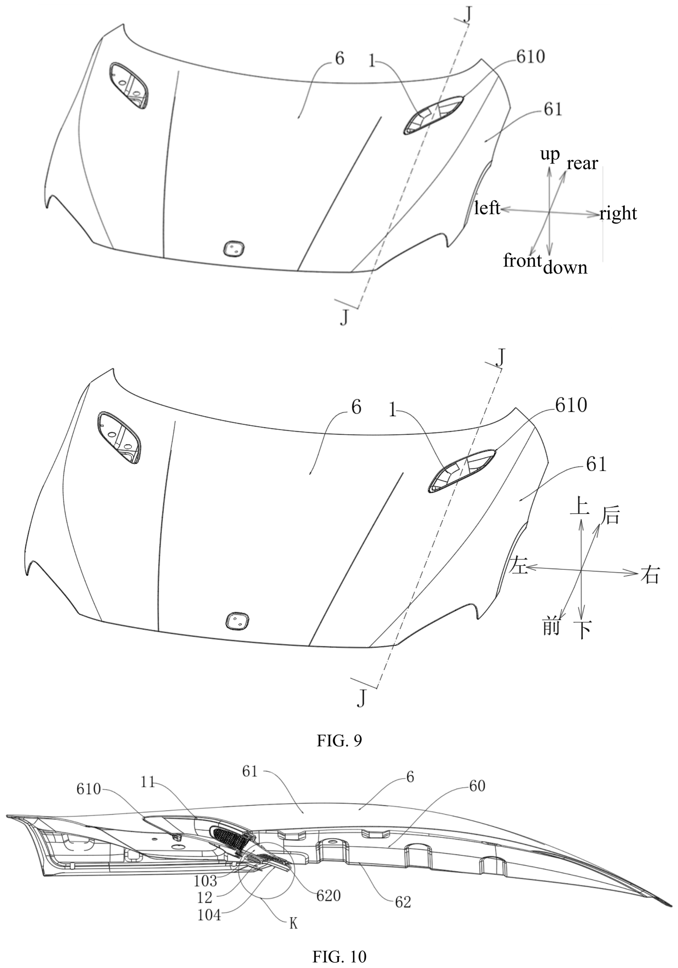

Referring to FIG. 9, FIG. 10, and FIG. 11, the front cabin cover 6 includes a front cabin outer plate 61 and a front cabin inner plate 62. The front cabin outer plate 61 and the front cabin inner plate 62 are connected to each other and define a cover plate cavity 60. The front cabin outer plate 61 is formed with an outer plate opening 610. The front cabin inner plate 62 is formed with an inner plate opening 620. The first flow passage member 1 is at least partially arranged in the cover plate cavity 60. The first flow passage member 1 is hermetically connected with the outer plate opening 610, and the first flow passage member 1 is hermetically connected with the inner plate opening 620, preventing fluid from entering the cover plate cavity 60 and improving sealing performance.

Optionally, the second flow passage 20 extends along a direction from front to rear. The first flow passage 10 extends at an angle upward in a direction away from the second flow passage 20.

Specifically, the first flow passage 10 extends rearward and at an angle upward in the direction away from the second flow passage 20. The angle at which the first flow passage 10 is inclined relative to a horizontal plane does not exceed 30 degrees. It should be noted that the angle is an acute angle between the first flow passage 10 and the horizontal plane at a rear side.

Additionally, as described above, the first flow passage member 1 includes a first flow passage component 11 and a second flow passage component 12. The first flow passage segment 103 inside the first flow passage component 11 may extend rearward and at an angle upward, with an inclination angle relative to the horizontal plane not exceeding 30 degrees.

Based on the above, for the first grid plate 31, the second grid plate 41 and the third grid plate 51, in addition to being parallel to each other, the first grid plate 31, the second grid plate 41 and the third grid plate 51 may be parallel to the first flow passage segment 103. This facilitates guiding wind along the outflow direction of air while also facilitating drainage and buffering of water.

Optionally, the first flow passage member 1 is arranged adjacent to an outer side on left and/or right side of the vehicle; and/or the second flow passage member 2 is arranged adjacent to the outer side on left and/or right side of the vehicle.

Optionally, two flow passage assemblies are provided. One of the two flow passage assemblies is arranged adjacent to an outer side on a left side of the vehicle, and the other one of the two flow passage assemblies is arranged adjacent to an outer side on a right side of the vehicle. Arranging flow passage assemblies on both left and right sides of the vehicle may more effectively improve aerodynamic performance of the vehicle.

Other implementations of the embodiments of the invention will be readily apparent to those skilled in the art from consideration of the specification and practice of the invention disclosed here. This invention is intended to cover any modification, usage or adaptation of the embodiments of the invention, these modifications, usage or adaptations follow the general principles of the embodiments of the invention and include those common knowledge or common technical means of the technical field that are not disclosed by the embodiments of the invention. The specification and examples are to be considered exemplary only, with a true scope of the embodiments of the invention being indicated by the following claims.

It should be understood that the embodiments of the invention are not limited to the precise structures described above and shown in the drawings, and various modifications and changes may be made. The scope of embodiments of the invention is limited only by the appended claims.

## Claims

1. A flow passage assembly, comprising a first flow passage member (1) and a second flow passage member (2), wherein
a first flow passage (10) is formed inside the first flow passage member (1), the first flow passage (10) comprising a first flow passage opening (101) and a second flow passage opening (102);
a second flow passage (20) is formed inside the second flow passage member (2), the second flow passage (20) comprising a third flow passage opening (201) and a fourth flow passage opening (202);
the second flow passage opening (102) is configured to communicate with the fourth flow passage opening (202), so that the first flow passage (10) is in communication with the second flow passage (20) and a first flow path is formed; and
under the first flow path, the third flow passage opening (201) is configured for inflow of a first flow medium, and the first flow passage opening (101) is configured for outflow of the first flow medium.

2. The flow passage assembly according to claim 1, wherein the second flow passage (20) further comprises at least one fifth flow passage opening (203);
a second flow path is further formed when the first flow passage (10) and the second flow passage (20) are in a communication state;
under the second flow path, the fifth flow passage opening (203) is configured for outflow of a second flow medium.

3. The flow passage assembly according to claim 1 or 2, wherein the flow passage assembly further comprises a third flow passage member, and a third flow passage is formed inside the third flow passage member, the third flow passage comprising a sixth flow passage opening and a seventh flow passage opening;
the sixth flow passage opening is configured to communicate with the second flow passage opening (102), so that the first flow passage (10) is in communication with the third flow passage, and when the first flow passage (10) and the third flow passage are in a communication state, the first flow passage opening (101) is configured for inflow of a second flow medium, and the seventh flow passage opening is configured for outflow of the second flow medium.

4. The flow passage assembly according to any of claims 1-3, wherein one of the first flow passage member (1) and the second flow passage member (2) is capable of moving relative to another one of the first flow passage member (1) and the second flow passage member (2), and the first flow passage member (1) and the second flow passage member (2) have a communication position, wherein the second flow passage opening (102) and the fourth flow passage opening (202) are arranged opposite to each other and communicate with each other at the communication position.

5. The flow passage assembly according to claim 2, wherein a first grid (3) is arranged at the second flow passage opening (102) of the first flow passage member (1); and/or a first grid (3) is arranged at the fourth flow passage opening (202) of the second flow passage member (2); and/or a second grid (4) is arranged at the fifth flow passage opening (203) of the second flow passage member (2);
optionally, wherein the first grid (3) comprises at least one first grid plate (31), the first grid plate (31) is arranged at the second flow passage opening (102), and the first grid plate (31) is arranged at an angle relative to the second flow passage opening (102); and/or
the first grid (3) comprises at least one first grid plate (31), the first grid plate (31) is arranged at the fourth flow passage opening (202), and the first grid plate (31) is arranged at an angle relative to the fourth flow passage opening (202); and/or
the second grid (4) comprises at least one second grid plate (41), and the second grid plate (41) is arranged at an angle relative to the fifth flow passage opening (203);
optionally, wherein a plurality of first grid plates (31) are provided, adjacent two of the plurality of first grid plates (31) are spaced apart from each other, and the plurality of the first grid plates (31) are parallel to each other; a plurality of second grid plates (41) are provided, adjacent two of the plurality of second grid plates (41) are spaced apart from each other, and the plurality of second grid plates (41) are parallel to each other; and the first grid plates (31) and the second grid plates (41) are parallel to each other.

6. The flow passage assembly according to any of claims 1-5, wherein the first flow passage (10) comprises a first flow passage segment (103) and a second flow passage segment (104) communicating with each other, and the first flow passage member (1) comprises a first flow passage component (11) and a second flow passage component (12), wherein the first flow passage segment (103) is formed inside the first flow passage component (11), and the second flow passage segment (104) is formed inside the second flow passage component (12);
wherein an end of the first flow passage segment (103) away from the second flow passage segment (104) is configured as the first flow passage opening (101), and an end of the second flow passage segment (104) away from the first flow passage segment (103) is configured as the second flow passage opening (102);
optionally, wherein a length of the second flow passage (20) is 1 to 1.5 times a length of the first flow passage segment (103).

7. The flow passage assembly according to claim 6, wherein a third grid (5) is arranged at an end of the first flow passage segment (103) adjacent to the second flow passage segment (104); and/or a third grid (5) is arranged at an end of the second flow passage segment (104) adjacent to the first flow passage segment (103);
optionally, wherein
a first grid (3) is arranged at the second flow passage opening (102), the first grid (3) comprises at least one first grid plate (31), and the first grid plate (31) is arranged at an angle relative to the second flow passage opening (102);
a second grid (4) is arranged at the fifth flow passage opening (203), the second grid (4) comprises at least one second grid plate (41), and the second grid plate (41) is arranged at an angle relative to the fifth flow passage opening (203);
the third grid (5) comprises at least one third grid plate (51), and the third grid plate (51) is arranged at an angle relative to an end of the first flow passage segment (103) adjacent to the second flow passage segment (104);
wherein the first grid plate (31), the second grid plate (41) and the third grid plate (51) are parallel to each other.

8. The flow passage assembly according to claim 6, wherein the second flow passage component (12) is configured as a sealing member and comprises a sealing member body (121), a first sealing portion (122) and a second sealing portion (123);
the second flow passage segment (104) is formed inside the sealing member body (121);
the first sealing portion (122) is arranged on the sealing member body (121) and located at a first end of the second flow passage segment (104), and the first sealing portion (122) is capable of being hermetically connected to the first flow passage component (11), to hermetically connect the first flow passage segment (103) and the second flow passage segment (104);
the second sealing portion (123) is arranged on the sealing member body (121) and located at a second end of the second flow passage segment (104), and the second sealing portion (123) is capable of being hermetically connected to the second flow passage member (2), to hermetically connect the second flow passage segment (104) and the second flow passage (20);
optionally, wherein the sealing member is integrally formed using an elastic material.

9. The flow passage assembly according to claim 8, wherein the first sealing portion (122) comprises a first elastic flange, the first elastic flange is arranged along a circumferential direction of the first end of the second flow passage segment (104), and is capable of elastically deforming along a first direction (A), the first flow passage component (11) is configured to press against the first elastic flange in the first direction (A); and/or
the second sealing portion (123) comprises a second elastic flange, the second elastic flange is arranged along a circumferential direction of the second end of the second flow passage segment (104), and is capable of elastically deforming along the first direction (A), the second flow passage member (2) is configured to press against the second elastic flange in the first direction (A);
optionally, wherein the first flow passage component (11) comprises a first body (111) and a first pressure-connection edge (112), the first flow passage segment (103) is formed inside the first body (111), the first pressure-connection edge (112) is arranged on the first body (111) extending along the first direction (A), and is arranged along a circumferential direction of an end of the first flow passage segment (103), the first pressure-connection edge (112) is configured to press against the first elastic flange in the first direction (A); and/or
the second flow passage member (2) comprises a second body (21) and a second pressure-connection edge (22), the second flow passage (20) is formed inside the second body (21), the second pressure-connection edge (22) is arranged on the second body (21) extending along the first direction (A), and is arranged along a circumferential direction of the fourth flow passage opening (202) of the second flow passage (20), the second pressure-connection edge (22) is configured to press against the second elastic flange in the first direction (A).

10. The flow passage assembly according to claim 8, wherein the sealing member further comprises a third sealing portion (124), the third sealing portion (124) is arranged on the sealing member body (121), and configured for hermetically connecting to an external component;
optionally, wherein the third sealing portion (124) comprises a sealing slot, the sealing slot is concavely arranged on an outer wall of the sealing member body (121), and configured for hermetically snapping with the external component; and/or the third sealing portion (124) comprises a sealing block, the sealing block is convexly arranged on an outer wall of the sealing member body (121), and configured for hermetically snapping with the external component.

11. The flow passage assembly according to claim 6, wherein the first flow passage segment (103) is gradually expanding in a direction away from the second flow passage segment (104);
optionally, wherein an area of an opening at an end of the first flow passage segment (103) away from the second flow passage segment (104) is a first area, an area of an opening at an end of the first flow passage segment (103) adjacent to the second flow passage segment (104) is a second area, and the first area is 1 to 2 times the second area.

12. The flow passage assembly according to any one of claims 1 to 10, wherein an extension direction of the first flow passage (10) intersects with an extension direction of the second flow passage (20).

13. The flow passage assembly according to any one of claims 1 to 12, wherein the second flow passage (20) comprises a second flow passage body (2001);
the second flow passage member (2) comprises a first flow passage plate (23) and a second flow passage plate (24), the first flow passage plate (23) and the second flow passage plate (24) are connected and jointed together face to face in a first direction (A), to define the second flow passage body (2001) extending along a second direction (B), optionally, wherein the second flow passage member (2) further comprises a sealing component, the sealing component is arranged between the first flow passage plate (23) and the second flow passage plate (24);
the fourth flow passage opening (202) is formed on the first flow passage plate (23) or the second flow passage plate (24); the first flow passage member (1) is arranged on a side of the second flow passage member (2) in the first direction (A); wherein the first direction (A) intersects with the second direction (B);
optionally, wherein
the second flow passage (20) further comprises at least one fifth flow passage opening (203);
the first flow passage (10) and the second flow passage (20) further have a second flow path in a communication state;
under the second flow path, the first flow passage opening (101) is configured for inflow of a second flow medium, and the fifth flow passage opening (203) is configured for outflow of the second flow medium;
the first flow passage member (1) is arranged adjacent to the first flow passage plate (23) in the first direction (A), the fourth flow passage opening (202) is formed on the first flow passage plate (23), the fifth flow passage opening (203) is formed on the second flow passage plate (24);
wherein, in the second direction (B), the fifth flow passage opening (203) is arranged between the third flow passage opening (201) and the fourth flow passage opening (202); optionally, wherein at least two fifth flow passage openings (203) are provided, and the at least two fifth flow passage openings (203) are spaced apart from each other in the second direction (B);
optionally, wherein the second flow passage (20) further comprises a groove flow passage (2002) communicating with the second flow passage body (2001);
the second flow passage member (2) further comprises an end structural member (26), the end structural member (26) is concavely provided with a groove (261) extending along the second direction (B);
one of the first flow passage plate (23) and the second flow passage plate (24) is capable of covering the groove (261), forming the groove flow passage (2002);
wherein an end of the groove flow passage (2002) away from the second flow passage body (2001) is configured as the third flow passage opening (201).

14. A vehicle, comprising a front cabin cover (6) and the flow passage assembly according to any one of claims 1 to 25;
the second flow passage member (2) is arranged in a front cabin, and the third flow passage opening (201) of the second flow passage (20) is arranged facing forward and configured to communicate with the outside;
the front cabin cover (6) is formed with a cover plate opening, the first flow passage member (1) is arranged in the cover plate opening, and the first flow passage opening (101) of the first flow passage (10) is configured to communicate with the outside;
when the front cabin cover (6) is in a closed state, the second flow passage opening (102) of the first flow passage member (1) and the fourth flow passage opening (202) of the second flow passage member (2) communicate with each other.

15. The vehicle according to claim 14, wherein the front cabin cover (6) comprises a front cabin outer plate (61) and a front cabin inner plate (62), the front cabin outer plate (61) and the front cabin inner plate (62) are connected to each other and define a cover plate cavity (60);
the front cabin outer plate (61) is formed with an outer plate opening (610), the front cabin inner plate (62) is formed with an inner plate opening (620), and the first flow passage member (1) is at least partially arranged in the cover plate cavity (60);
the first flow passage member (1) is hermetically connected with the outer plate opening (610), and the first flow passage member (1) is hermetically connected with the inner plate opening (620);
or
wherein the second flow passage (20) extends along a direction from front to rear, and the first flow passage (10) extends at an angle upward in a direction away from the second flow passage (20); optionally, wherein the first flow passage (10) extends rearward and at an angle upward in the direction away from the second flow passage (20), and an angle at which the first flow passage (10) is inclined relative to a horizontal plane does not exceed 30 degrees;
or
wherein the first flow passage member (1) is arranged adjacent to an outer side on left and/or right side of the vehicle; and/or the second flow passage member (2) is arranged adjacent to the outer side on left and/or right side of the vehicle;
optionally, wherein two flow passage assemblies are provided, one of the two flow passage assemblies is arranged adjacent to an outer side on a left side of the vehicle, and another of the two flow passage assemblies is arranged adjacent to an outer side on a right side of the vehicle.
